# EUROPÄISCHE PATENTSCHRIFT

(11) **EP 0 703 711 B1**
(45) Veröffentlichungstag und Bekanntmachung des Hinweises auf die Patenterteilung: **17.07.2002**
(21) Anmeldenummer: 95202490.9
(22) Anmeldetag: 14.09.1995
(51) Int. Cl.: H04N 7/26, H04N 7/30

(54) **Coder zur segmentweisen Codierung eines Bildsignales**
Video signal segmentation coder
Codeur à segmentation d'un signal vidéo

(30) Priorität: 22.09.1994 DE 4433819
(43) Veröffentlichungstag der Anmeldung: 27.03.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Vogel, Peter, Dipl.-Ing., D-22335 Hamburg (DE)
(74) Vertreter: Volmer, Georg, Dipl.-Ing.

(56) Entgegenhaltungen:
- EP-A- 0 469 648
- EP-A- 0 493 130
- EP-A- 0 597 647
- EP-A- 0 677 969
- EP-A- 0 759 678
- US-A- 5 073 821
- US-A- 5 245 427

## Beschreibung

Die Erfindung betrifft einen Coder zur segmentweisen Codierung eines Eingangssignales, mit einem steuerbaren Quantisierer und einem Pufferspeicher, in den quantisierte und VLC-codierte Daten des Eingangssignales zwischengespeichert werden.

Derartige Coder werden zum Beispiel in Bildtelefonen verwendet, die entsprechend dem CCITT-Standard H.261 aufgebaut sind (vergleiche hierzu zum Beispiel: Draft Revision of Recommendation H.261: Video Codec for Audiovisual Services at px64 kbit/s. Signal Processing: Image Communication 2 (1990), 221-239. Elsevier). Die angegebene Literaturstelle wird im folgenden mit (I) zitiert werden.

Eine andere Anwendungsmöglichkeit ergibt sich bei der Codierung von Standbildern, soweit die Codierung entsprechend der CCITT-Empfehlung T.81 vorgenommen wird. Die Codierung eines Standbildes erfolgt danach in mehreren Schritten mit steigender Bildqualität, wobei in jedem Schritt das zuvor codierte und wieder decodierte Standbild als Prädiktionsbild verwendet wird. Die Empfehlung T.81 soll im folgenden mit (II) zitiert werden (Vgl. hierzu: International Standard DIS 1011918-1. CCITT Recommendation T.81. Digital Compression and Coding of Continuous-Tone Still Images. Part I: Requirements and Guidelines (JPEG)).

Schließlich werden Coder mit den Eingangs aufgezählten Merkmalen auch bei der Audio-Codierung eingesetzt, wie zum Beispiel folgendes Dokument zeigt: Brandenburg, K. et al.: Aspec: Adaptive spectral entropy coding of high quality music signals. An Audio Engineering Society preprint. Presented at the 90th Convention 1991 February 19-22 Paris. Preprint 3011 (A-4). Es soll im folgenden mit (III) zitiert werden.

Die Erläuterung der vorliegenden Erfindung soll jedoch hauptsächlich anhand eines Video-Coders erfolgen, der mit dem H.261-Standard kompatibel ist. Die Übertragung auf die anderen Anwendungsfälle ergibt sich dann ohne weiteres aus dieser speziellen Erläuterung.

Einem Coder nach (I) werden die zu codierenden Videodaten bildweise zugeführt. Die Eingangs angedeuteten Signalsegmente sind im allgemeinen (s. jedoch weiter unten) die zu einem Videobild gehörenden Prädiktionsfehler im CIF-Format oder im QCIF-Format (vergleiche hierzu (I)).

Videodaten im CIF-Format werden nach (I) wiederum hierarchisch in weitere Teildaten gegliedert, nämlich in zwölf Blockgruppen (GOB's). Jede Blockgruppe gliedert sich in dreiunddreißig Macroblöcke und jeder Macroblock in sechs Blöcke. Ein Block besteht entweder aus den 64 Luminanzwerten (Y-Werte) eines quadratischen Bildausschnittes von 8 x 8 Bildpunkten oder aus 64 Werten einer der beiden Farbdifferenz-Komponenten (C_{B}- oder C_{R}-Werte). Diese Chrominanzwerte ergeben sich aus einem Bildausschnitt von 16 x 16 Bildpunkten, der bezüglich der Chrominanz im Verhältnis 1:2 horizontal und vertikal unterabgetastet ist. Ein Macroblock enthält sowohl Luminanz- als auch Chrominaz-Informationen eines Bildausschnittes von 16 x 16 Bildpunkten.

Ein Coder nach (I) arbeitet in zwei Hauptbetriebsarten, nämlich im INTER-Modus oder im INTRA-Modus. Im INTER-Modus werden die Differenzen der Bildpunktdaten zwischen einem Eingangsbild (aktuelles Bild) und seinem decodierten und gegebenenfalls bewegungskompensierten Vorgängerbild (Prädiktionsbild) codiert. Im INTRA-Modus wird statt des Prädiktionsfehlers das Eingangsbild ohne Bezugnahme auf das Vorgängerbild codiert.

Die Codierung erfolgt blockweise. Die Blockdaten oder die Differenzen der Blockdaten werden einer zweidimensionalen diskreten Cosinus-Transformation unterworfen. Die dabei bestimmten Transformationskoeffzienten werden einem steuerbaren Quantisierer zugeführt, nach deren Quantisierung VCL-codiert und in einen Pufferspeicher eingeschrieben. Ferner wird in einem Rückkoppelungszweig des Coders das codierte Bild (blockweise) wieder decodiert, in einem Bildspeicher gespeichert und als Prädiktionsbild für das nächste Eingangsbild verwendet.

Der Quantisierer des Coders ist insofern steuerbar, als bei ihm die Quantisierungskennlinie eingestellt werden kann. Unterschiedliche Quantisierungskennlinien unterscheiden sich durch die Länge ihrer Quantisierungsintervalle. Innerhalb einer Quantisierungskennlinie ist die Länge der Quantisierungsintervalle (auch Schrittweite genannt) in der Regel gleich. Man erhält eine grobe Quantisierung bei Kennlinien mit großer Schrittweite und eine feine Quantisierung bei Kennlinien mit kleiner Schrittweite. Wird grob quantisiert, wird also ein großer Quantisierungsfehler in Kauf genommen, werden im allgemeinen weniger VLC-Daten in den Pufferspeicher eingeschrieben. Wird fein Quantisiert, steigt im allgemeinen die Zahl der Bits, die in Form der VLC-Codeworte in den Pufferspeicher vor ihrer Übertragung zwischengespeichert werden.

Entleert wird der Pufferspeicher mit zeitlich konstanter Bitrate, während das Füllen des Speichers mit hochgradig zeitabhängiger Bitrate erfolgen kann. Ob viele oder wenige Bits pro Sekunde in den Pufferspeicher eingeschrieben werden, hängt sowohl von der Einstellung des Quantisierers als auch von der Größe des Prädiktionsfehlers - also von den Bilddaten - ab.

Für welche Daten eines Videobildes welche Quantisierungskennlinie zu verwenden ist, ist in (I) nicht vorgeschrieben. Vorgeschrieben ist lediglich, daß innerhalb eines Macroblockes nur eine Quantisierungskennlinie zu verwenden ist, die Quantisierungskennlinie also höchstens von Macroblock zu Macroblock geändert werden darf und daß für den DC-Koeffizienten im INTRA-Modus immer die gleiche Quantisierungskennlinie verwendet werden soll. Die möglichen Quantisierungsschrittweiten sind die ganzen Zahlen 2, 4, 6,.. bis 62.
Üblich ist eine Steuerung des Quantisierers in Abhängigkeit vom Pufferfüllstand P, wie zum Beispiel die EP 036 3 682 oder die EP 028 4 168 zeigt. Sinn einer solchen Steuerung ist, einen Überlauf oder einen Leerlauf des Pufferspeichers zu vermeiden. Da inzwischen die Kapazität von Speichern kaum noch ein technisches Problem ist, also die Gefahr des Überlaufs und des damit verbundenen Informationsverlustes nicht mehr besteht, weil genügend große Speicher verwendet werden können, ist es dennoch wünschenswert, daß der Füllstand P des Pufferspeichers einen Schwellwert PS nicht überschreitet. Der Grund hierfür ist der, daß - ganz ausgeprägt bei niederen Übertragungsbitraten - der zeitliche Abstand zwischen dem Codieren eines Videobildes auf der Sendeseite und dem Decodieren und dem Aufbauen des gleichen Videobildes auf der Empfangsseite unannehmbar groß wird. Dieser zeitliche Abstand muß zum Beispiel bei einem Dialog über Bildtelefone nahezu unmerklich für die Teilnehmer sein. Akzeptabel sind Zeiten, die im Bereich einer zehntel Sekunde liegen. Daher bleibt auch bei technisch fast grenzenloser Speicherkapazität das Problem, den Füllstand P des Pufferspeichers aus den dargelegten Gründen nicht über den Schwellwert PS hinausgehen zu lassen.

Die Steuerung des Quantisierers allein durch den Füllstand des Pufferspeichers (im folgenden Füllstandssteuerung genannt) führt in der Regel dazu, daß Macroblöcke, die zum gleichen Bild oder zur gleichen Bilddifferenz gehören, mit unterschiedlichen Quantisierungskennlinien quantisiert werden, da der Füllstand des Pufferspeicher während des Kodierens eines Bildes starken Schwankungen unterworfen sein kann.

Der Wechsel von einer Quantisierungskennlinie zu einer anderen während der Codierung eines Bildes ist bei der Füllstandssteuerung in dem Sinne willkürlich, als dieser Wechsel ohne Rücksicht auf den Informationsgehalt der noch zu kodierenden Makroblöcke vorgenommen werden muß.
So können für den Betrachter wichtige Bildteile grob quantisiert werden und andere - weniger wichtige - wiederurn unnötig fein. Die Füllstandssteuerung führt deshalb zu einer subjektiv wie auch objektiv unbefriedigenden Bildqualität.

Aus dem Dokument US-A-5 073 821 ist noch ein Coder bekannt. Dieser ist charakterisiert durch eine segmentweise Codierung, in der große Blöcke in eine Vielzahl kleiner Blöcke aufgeteilt werden, was zu einer technisch aufwendigen Realisierung (Hardware und Software) führt. Danach werden die einzelnen Blöcke transformiert und ihre Komponenten zwischengespeichert. Gleichzeitig wird das Bitvolumen geschätzt. Aufgrund dieser Schätzung wird für jeden Block der passende Quatisierer gewählt. Nach der VLC-Codierung werden die Daten übertragen. Hierbei wird ein Quantisierer aus einer Anzahl vieler Quantisierer durch Schätzung des Bitvolumens (Anzahl der zu übertragenen Bits) ausgewählt. Eine probeweise Codierung der einzelnen Blöcke mit unterschiedlichen Einstellungen des Quantisierers ist nicht vorgesehen. Die Bestimmung des Quantisierers bzw. der Quantisierungsschrittweite durch Schätzung des Ergebnisses anstatt durch Intervallschachtelung führt zu einer geringen Genauigkeit.

Ferner ist aus dem Dokument EP-A-0 469 648 eine Datenkomprimierungsmethode bekannt, die durch schrittweise Verschiebung und Verzögerung der Daten den Quantisierungsparameter schätzt. Bei jedem Schritt muß berechnet werden, welches Bitvolumen der aktuelle Quantisierungsparameter ergeben würde. Falls dies nicht der gewünschten Anzahl entspricht, wird eine Differenz gebildet zwischen dem errechneten und vorgegebenen Sollwert. Danach wird ein neuer Quantisierungsparameter mit Hilfe eines sogenanntem » Bisection " Algorithmus berechnet. Die Schätzung wird schrittweise wiederholt, wobei der zuvor ermittelte Schätzwert für die folgende Schätzung verwendet wird, um somit ein besseres Ergebnis zu erzielen, welches der gewünschten Übertragungsrate nahe kommt. Da die eigentliche Quantisierung nach der endgültigen Bestimmung des Quantisierungsparameters stattfindet, muß während der Schätzung bei jedem Schritt die Quantisierung simuliert werden, damit das Bitvolumen berechnet werden kann. Diese Simulation ist mit einem unnötigen Rechenaufwand bei jedem Schritt verbunden. Zusätzlich muß eine konstante Anzahl N der Iterationsschritte angegeben werden. Sowohl die Simulation als auch die Angabe der Iterationsschritte N ist für eine steuerbare Quantisierung des erfindungsgemäßen Coders überflüssig.

Das Dokument US-A-5 245 427 beschreibt ebenfalls einen Coder, der zur Bildübertragung verwendet wird. Dabei wird nach jeder Quantisierung das Bitvolumen errechnet und eine erneute Quantisierung mit einer verbesserten Schrittweite gestartet. Die Quantisierungsparameter werden nicht durch Intervallschachtelung ermittelt, sondern durch eine andere mathematische Formel (Q_{S} = q * f / k(3)) berechnet, wobei die Quantisierungsschrittweite durch das Produkt aus dem Skalierungsfaktor f und den Quantisierungsmatrixfaktoren q bestimmt wird. Der Skalierungsfaktor f setzt sich zusammen aus dem Bitvolumen des vorangehenden Bildes, dem Sollbitvolumen und dem AC- Level des Transformierungsfaktors des aktuellen Bildes. Im Gegensatz zur Näherung des Bitvolumens an das Sollbitvolumen durch Intervallschachtelung kann eine konstante Änderung des Parameters ein vorgegebenes Bitvolumen nicht beliebig genau erreicht werden.

Aus dem Dokument EP-A-0 493 130, welches ebenfalls eine segmentweise Bildübertragung beschreibt, ist bekannt, dass der gewünschte Informationsgehalt durch mehrere Versuche mit unterschiedlichen Kontrollkoeffizienten, die für die Qualität und Quantität der Daten bei der Komprimierung maßgebend sind, bestimmt. Dabei ist der N-te Kontrollkoeffizient kleiner als der (N+1)-te Kontrollkoeffizient. Diese Koeffizienten werden durch lineare Näherung errechnet. Wichtig dabei ist, daß mit dem genäherten Koeffizienten die gewünschte Kompressionsrate nicht übertroffen wird. Für die Berechnung der linearen Näherung des optimalen Parameters wird ein hoher Aufwand für Speicher- und Rechenkapazitäten benötigt.

Der Erfindung liegt die Aufgabe zugrunde, eine Steuerung des Quantisierers derart durchzuführen, daß sich die Qualität der decodierten Bilder subjektiv und objektiv wesentlich verbessert.

Diese Aufgabe wird durch einen Coder gemäß Anspruch 1 gelöst.

Im Falle der Bildcodierung bedeutet das beispielsweise, daß für das gesamte Bild (Signalsegment) - also für alle Macroblöcke eines Bildes - nur eine einzige Einstellung des Quantisieres verwendet wird.

Bei dieser Maßnahme wird von der Erkenntnis Gebrauch gemacht, daß die Verwendung einer einzigen Quatisierungskennlienie für alle Blöcke eines Bildes subjektiv und objektiv zur nahezu bestmöglichen Bildqualität führt. Auch das sogenannte "blocking" wird reduziert. Zwar ist eine Unterscheidung zwischen wichtigen und unwichtigen Teilen eines Bildes nicht vorgesehen, jedoch ist eindeutig der Fall ausgeschlossen, daß wichtige Teile grob und unwichtige fein quantisiert werden.
Eine vorteilhafte Ausgestaltung der Erfindung besteht darin, daß Mittel dafür vorgesehen sind, die endgültige Einstellung des Quantisierers mit einer Intervallschachtelung zu ermitteln. Ein solches Merkmal beschleunigt die Suche nach einer passenden Quantisierungsschrittweite s nur dann, wenn man die plausible und durch Erfahrung vielfach bestätigte Annahme als richtig unterstellt, daß das Bitvolumen für jedes Signalsegment eine monotone Funktion der Quantisierungsschrittweite s ist.

Weitere Ausgestaltungen bestehen darin, daß Mittel dafür vorgesehen sind, als Endpunkte des ersten Intervalls die feinste und die gröbste Einstellung des Quantisierers zu verwenden, und darin, die feinste Einstellung des Quantisierers dann als endgültige Einstellung zu verwenden, wenn das Sollbitvolumen größer als das zur feinsten Einstellung gehörende Bitvolumen ist und die gröbste Einstellung des Quantisierers dann als endgültige Einstellung zu verwenden, wenn das Sollbitvolumen kleiner als das zur gröbsten Einstellung gehörende Bitvolumen ist, sowie darin, die Intervallschachtelung nach einer vorbestimmten Anzahl von Intervallen zu beenden.

Anhand eines Ausführungsbeispieles soll die Erfindung nun in Verbindung mit den Figuren naher erläutert werden.

Es zeigt:
- Fig. 1: ein Blockschaltbild eines Coders mit Merkmalen der Erfindung und
- Fig. 2: einen Flußlaufplan zur Steuerung eines Coders mit erfindungsgemäßen Merkmalen.

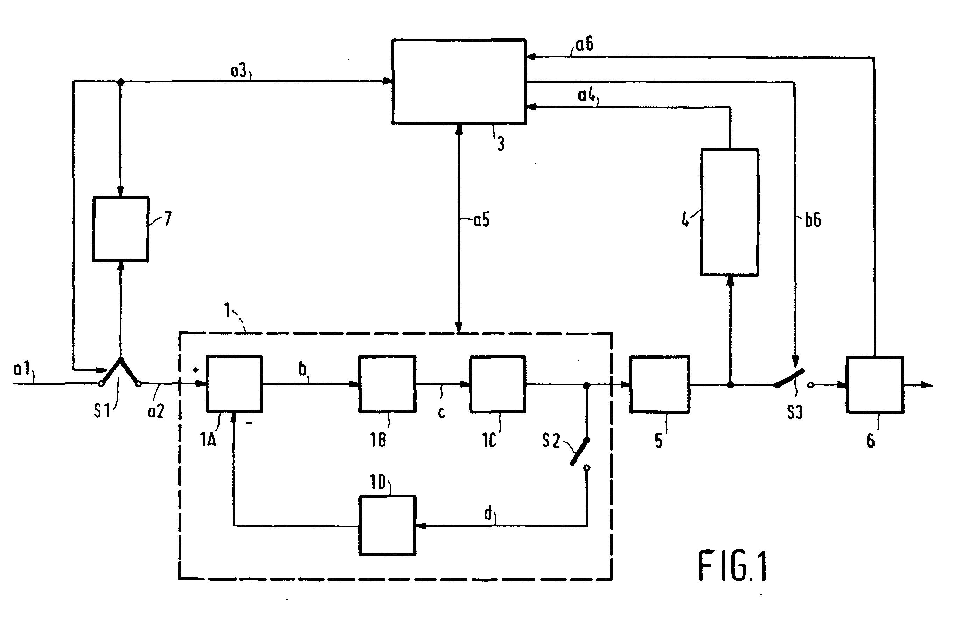

Im Prinzipschaltbild nach Fig. 1 sind die wichtigsten Funktionseinheiten eines Video-Coders angegeben, der nach den in (I) dargelegten Vorschriften arbeitet und der auch erfindunggemäße Zusätze enthält. Taktleitungen sind nicht eingetragen oder nur angedeutet. Ebenso sind eine Reihe von Steuerleitungen und Adreßleitungen fortgelassen oder ebenfalls nur angedeutet, um die Figur nicht unübersichtlich zu machen. Der Fachmann kann die fortgelassenen Teile jedoch ohne weiteres in der Figur gedanklich ergänzen und bei der Konkretisierung der Schaltung hinzufügen.

Mit dem Bezugszeichen 1 ist eine Quell-Coder versehen, d.h. derjenige Teile eines Video-Coders nach (I), der als wesentliche Bestandteile eine Transformationseinheit 1B, einen steuerbaren Quantisierer 1C und eine Rückkopplungsschleife mit einem Decoder 1D enthält. Durch den Decoder 1D werden Prädiktionsbilder für Eingangsbilder gewonnen, die dem Video-Coder 1 auf einer Leitung a2 zugeführt werden. Die Eingangsbilder auf der Leitung a2 sind eine Auswahl der auf einer Leitung a1 mit einer Bildfolgefrequenz von etwa 30 Hz ankommenden Bilder im CIF-Format. Im Beispiel wird ein Umschalter S1 so gesteuert, daß im Mittel nur jedes dritte Bild von der Leitung a1 auf die Leitung a2 gelangt.

Eine steuerbare Funktionseinheit 1A gibt entweder die Eingangsbilder von der Leitung a2 oder den Prädiktionsfehler (ebenfalls im CIF-Format) auf eine Leitung b. Der Prädiktionsfehler besteht aus den Differenzen aller Daten eines Eingangsbildes und den Daten des Prädiktionsbildes. Das Signal auf der Leitung b ist das durch den Quell-Coder 1 nach den in (I) niedergelegten Vorschriften zu codierende und oben erwähnte Eingangssignal. Es gelangt nach einer diskreten Cosinus-Transformation durch die Einheit 1B über eine Leitung c zum steuerbaren Quantisierer 1C und von dort über einen steuerbaren Schalter S2 und einen Abschnitt einer Leitung d zu einem Variable-Length-Coder 5, auch Entropie-Coder genannt. Die Codeworte des Entropie-Coders 5 werden in einen Pufferspeicher 6 eingeschrieben und aus diesem mit einer Bitrate von 64 x p kbit/s ausgelesen und gegebenenfalles leitungscodiert an einen Empfänger übertragen. Sofern nichts anderes ausdrücklich erwähnt ist, wird im Ausführungsbeispiel der Fall p = 1 behandelt. Die in den Pufferspeicher 6 eingeschriebenen Codeworte umfassen auch die sogenannten Nebeninformationen für ein Bild. Hierzu gehören unter anderem die Komponenten von Bewegungsvektoren, die für eine wirkungsvolle datenreduzierende Codierung von Bewegtbildern erforderlich sind.

Alle steuerbaren Funktionseinheiten des Quell-Coders 1 werden durch eine Steuereinheit 3 gesteuert, was durch eine Verbindung a5 der Steuereinheit 3 mit dem Quell-Coder 1 angedeutet ist. Bei der Erfindung geht es hauptsächlich um die Steuerung des Quantisierers 1C derart, daß sich der Füllstand F des Pufferspeichers 6 während des Betriebes innerhalb vorgeschriebener Grenzen bewegt, ohne daß - entgegen dem Stand der Technik - die Einstellung des Quantisierers 1C während der Codierung eines Bildes geändert wird. Der Füllstand F wird über eine Leitung a6 an die Steuereinheit 3 übertragen und in einer weiter unten beschriebenen Weise von ihr ausgewertet.

Daneben besteht ein Informationsaustausch zwischen der Steuereinheit 3 und einer Reihe von Sonderbausteinen, die im Wesentlichen der Präanalyse eines zu codierenden Bildes dienen und die nicht Bestandteile eines Coders nach (I) sein müssen. Diese Bausteine umfassen unter anderem den schon erwähnten Umschalter S1 und einen Bildspeicher 7; sie stehen über ein Leitungssystem a3 mit der Steuereinheit 3 in Verbindung. Ein weiterer Sonderbaustein ist ein Bitzähler 4, der die vom VLC-Coder 5 pro Bild erzeugten Bits zählt und seinen Zählerstand über eine Leitung a4 an die Steuereinheit 3 weitergibt. Die Anzahl der pro Bild vom VLC-Coder 5 erzeugten Bits soll im folgenden Bildvolumen B genannt werden. Das Bildvolumen B und den Pufferfüllstand P benötigt die Steuereinheit 3 zur Ausübung ihrer Steuerfunktionen. Sonderbaustein ist auch ein steuerbarer Schalter S3, der über eine Steuerleitung b6 von der Steuereinheit 3 gesteuert wird.

Die Aufgabe, die die Steuerschaltung 3 zu lösen hat, läßt sich in folgender Frage zusammenfassen: Wie muß die Schrittweite sᵢ des Quantisierers 1C für die endgültige Codierung des i-ten Bildes gewählt werden, damit das Bildvolumen Bᵢ(sᵢ) bei dieser Codierung möglichst gut ein vorgegebenens Soll-Bildvolumen BSᵢ annimmt?

Die erfindungsgmäße Antwort auf diese Frage soll anhand der Vorgänge beschrieben werden, die sich in der Schaltung nach Fig. 1 abspielen, wenn eine Sequenz von Videobildern codiert wird. Die codierten Bilder werden durchnummeriert; Größen, die zum i-ten codierten Bild gehören, werden dabei - wie oben schon geschehen - mit einem Index i versehen. Vor der Codierung des ersten Bildes bestimmt die Steuereinheit 3, wie groß das Sollbitvolumen BS₁ für das erste Bild zu sein hat, damit der Pufferspeicher 6 den gewünschten Füllstand durch die Daten erhält, mit denen er bei der Codierung des ersten Bildes geladen wird. Im Beispiel ist SB₁ = 64000 Bit. Diese Zahl ergibt sich aus dem Quotienten von Übertragungsbitrate (64 kBit pro Sekunde) und der Bildfolgefrequenz der codierten Bilder (10 Bilder pro Sekunde); sie ist im Beispiel für jedes Bild gleich groß, also unabhängig von i.

Sie Steuereinheit 3 steuert den am Eingang des Coders 1 gelegenen Umschalter S1. In der eingezeichneten Stellung des Umschalters S1 wird das erste Bild in den Bildspeicher 7 eingeschrieben. Ist der Schreibvorgang beendet, wird der Umschalter S1 in seine zweite angedeutete Stellung gelegt und der Inhalt des Speichers 7 mit erhöhter Taktfrequenz dem Quell-Coder 1 zugeführt und codiert. Der Umschalter S1 beibt in seiner zweiten Stellung, bis ein weiteres Videobild auf der Leitung a1 in den Bildspeicher 7 eingeschrieben werden kann.
Beim erstmaligen Auslesen des ersten Videobildes aus dem Bildspeicher 7 wird der Quantisierer 1C des QuellCoders 1 auf seine feinste Quantisierung (s = 2) eingestellt. Dann wird der erste Probelauf durchgeführt, um festzustellen, wieviele Bits mit dieser Einstellung bei der Codierung des ersten Bildes anfallen. Das zugehörige Bitvolumen B₁(2) erhält die Steuereinheit 3 vom Bitzähler 4. Die Schalter S2 und S3 werden von der Steuereinheit 3 in der eingezeichneten Stellung (Sperrphase) gehalten und bleiben in dieser Stellung, solange Probeläufe stattfinden, d.h. Codierungen durchgeführt werden, die allein dem Zweck dienen, festzustellen, wieviele Bits bei einer bestimmten Einstellung des Quantisierers pro Bild anfallen. In dieser Stellung wird verhindert, daß der Inhalt des Pufferspeichers 6 und das Prädiktionsbild des DeCoders 1D verändert werden.
Hat nun die Steuereinheit beim ersten Probelauf für das erste Bild mit der Quantisierungschrittweite s = 2 festgestellt, daß das Sollbitvolumen BS₁ größer ist als das Bitvolumen B₁(2), dann wird der Codiervorgang mit geschlossenen Schaltern S2 und S3 (Leitphase) wiederholt. Die endgültige Schrittweite s₁ hat dann den Wert 2.

Stellt die Steuereinheit jedoch fest, daß das Sollbildvolumen BS₁ kleiner als das Bitvolumen B₁(2) ist, so wird bei geöffneten Schaltern S2 und S3 ein zweiter Suchlauf mit s 62 gestartet. Stellt sich bei diesem Suchlauf heraus, daß das Sollbitvolumen BS₁ kleiner als das Bitvolumen B₁(62) ist, so wird das erste Bild mit der Schrittweite s = 62 codiert.

Liegt nun das Sollbitvolumen BS₁ zwischen den Bildvolumina B₁(62) und B₁(2), die gesuchte Schrittweite also im Intervall 2 < s < 62, so wird ein weiterer Probelauf durchgeführt, und zwar mit der Schittweite s = 32; sie liegt etwa in der Mitte des Intervalls von Schrittweiten mit den Endpunkten s = 2 und s 62. Ergibt sich für diese Schrittweite ein Bitvolumen B₁(32), das größer ist als das Sollbitvolumen BS₁, so muß die gesuchte Schrittweite im Intervall 32 < s < 62 zu finden sein, andernfalls im Intervall 2 < s < 32. Mit einem dieser Teilintervalle wird dann genauso verfahren wie vorher mit dem gesamten Intervall für die Schrittweiten (Intervallschachtelung).

Die Erfahrung hat gezeigt, daß nach etwa 8 bis 10 Probeläufen für fast jede Bildsequenz das Bitvolumen mit dem Sollbitvolumen bis auf etwa 1°/°° übereinstimmt. Im Beispeil wird die Zahl der Probeläufe auf zehn begrenzt. Das bedeutet, daß die Schalter S2 und S3 vor dem zehnten Probelauf in ihre zweite Stellung (Leitphase) gebracht werden. Der zehnte Probelauf ist gleichzeitig der endgültige Durchlauf. Durch ihn wird der Pufferspeicher 6 annähernd mit dem Sollbitvolumen gefüllt und im Decoder 1D ein neues Prädiktionsbild für ein weiteres, über die Leitung a1 zugeführtes Videobild zu Verfügung gestellt. Bevor dieses Bild in den Speicher 7 eingeschrieben wird, werden die Schalter S2 un S3 wieder in ihre Sperrphase gebracht.

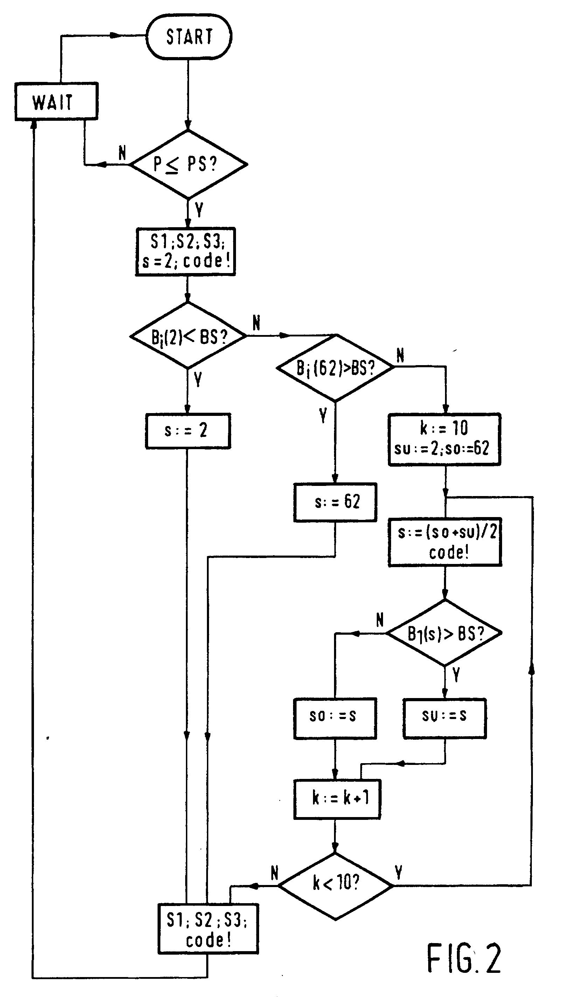

Die Funktion der Steuereinheit 3 wird'durch ein Programm festgelegt, das die Programmschritte umfaßt, die in der Figur 2 graphisch dargestellt sind.

Die Figur 2 soll nun näher erläutert werden. Nach dem Start des Programms, das in der Steuereinheit 3 abgelegt ist, überprüft diese zuerst den Füllstand P des Pfufferspeichers 6. Ist dieser Füllstand größer als ein Schwellwert PS, so wird auf das nächste Videobild auf der Leitung a1 gewartet. Sodann wird die Abfrage wiederholt, bis der Füllstand P kleiner oder gleich einem Schwellwert PS ist. In diesem Falle bringt die Steuereinheit 3 den Schalter S1 in eine Stellung, in der der Coder 1 mit dem Bildspeicher 7 verbunden ist. Gleichzeitig werden die Schalter S2 und S3 geöffnet (Sperrphase). Sodann wird die Variable s auf zwei gesetzt. Der aktuelle Wert der Variablen s ist die Schrittweite, auf die der Quantisierer 1C eingestellt wird.

Danach wird das im Speicher 7 befindliche Bild probeweise codiert. Die Anzahl der im VLC-Coder erzeugten Bits Bᵢ(2) werden vom Bitzähler 4 gezählt und das Ergebnis der Steuereinheit 3 über die Leitung A4 mitgeteilt. Darauf erfolgt die Abfrage, ob dieses Bitvolumen kleiner ist als das Sollbitvolumen BS, das im vorliegenden Beispiel für alle Bilder gleich ist, nämlich 6400 Bit.

Wird die zuletzt gestellte Frage mit ja beantwortet, werden zunächst die Schalter S2 und S3 in ihrer Leitphase gebracht, dann das im Speicher 7 befindliche Bild entgültig mit der Schrittweite 2 codiert und nach der Codierung wird der Schalter S1 in die Stellung gebracht, in der er die Leitung a1 mit dem Eingang des Bildspeichers 7 verbindet. Sodann wird auf das nächste Bild gewartet und die Abfrage P ≤ PS? wiederholt. Sollte die Antwort auf die Frage Bᵢ(2) ≤ BS? nein lauten, so wird die Variable s auf 62 gesetzt und mit dieser Schrittweite das im Bildspeicher 7 befindliche Bild nochmals codiert. Stellt sich heraus, daß Bᵢ(62) > BS ist, so werden anschließend die gleichen Programmteile durchlaufen, die im Falle der Bejahung der Frage Bᵢ(2) < s durchlaufen wurden.

Sollte die Frage Bᵢ(62) > BS mit nein beantwortet werden, so wird eine Laufvariable k auf 10 gesetzt und eine Hilfsvariable su auf 2 sowie eine weitere Hilfsvariable so auf 62 gesetzt. Diese beiden Variablen geben die Grenzpunkte des Intervalls an, in dem die gesuchte Schrittweite zu finden ist. Sodann wird die Variable s für die Schrittweite auf den Mittelwert dieses Intervalles gesetzt, nämlich auf (su + su)/2. Falls sich bei dieser Operation keine zulässige Schrittweite ergibt, muß der Wert entsprechend gerundet werden. Sodann wird mit dieser Schrittweite ein weiterer Probelauf gestartet und danach abgefragt, ob sich das ergebende Bitvolumen Bᵢ(s) größer ist als das Sollbitvolumen BS. Falls ja, wird der Wert der Variablen su auf den aktuellen Wert von s gesetzt, falls nein, wird die Variable so auf den aktuellen Wert von s gesetzt. Sodann wird die Laufvariable k um eine Einheit erhöht und anschließend abgefragt, ob ihr Wert noch kleiner als 10 ist oder nicht. Falls nein, wird eine endgültige Codierung vorgenommen, falls ja wird die Schleife für die Laufvariable k nochmals durchlaufen.

Die im Ausführungsbeispiel angegebenen Mittel zur einmaligen Einstellung des Quatisierers für ein zu codierendes Bild, können auch durch andere Mittel ersetzt werden, die demgleichen Zweck dienen.

So kann zum Beispiel der Bildspeicher 7 fortfallen. Stattdessen muß jedoch zwischen der Transformationseinheit 1B und dem Quantisierer 1C ein Speicher eingefügt werden, in dem die transformierten Werte eines Eingangsbildes zwischengespeichert werden. Dann entfällt beim Probelauf das wiederholte Transformieren.

Es ist auch denkbar, daß der Bitzähler 4 entfällt, denn für die angegebene Funktion braucht die Steuereinheit 3 lediglich die Zahl der Bits, die bei der VLC-Codierung anfallen, und nicht die Bits selbst. Diese Anzahl läßt sich unter Umständen aus dem VLC-Codierer 5 gewinnen, wenn die Länge der Codewörter, durch das ein Videobild codiert wird, auf einfache Weise abfragbar ist. Dann sind lediglich diese Längen aufzuaddieren.

Auch die Wirkungsweise der Schalter S1, S2 und S3 lassen sich mit anderen Mitteln erreichen, zum Beispiel durch Unterbrechung der Taktzufuhr zu geeigneten Zeitpunkten.

## Patentansprüche

1. Coder zur segmentweisen Codierung eines Eingangssignales (b) mit
- einem steuerbaren Quantisierer (1C),
- einem Pufferspeicher (6) zum Zwischenspeichern von quantisierten und VLCcodierten Daten des Eingangssignals (b),
- ein Bitzähler (4) zur Berechnung des sich aus einer VLC-Codierung des Signalelementes ergebenden Bitvolumens (Anzahl der Bits) während eines Probelaufs mit einer aktuell von einer Steuereinheit (3) ausgewählten Schrittweise des Quantisierers (1C),
- der Steuereinheit (3) zur unterschiedlichen Einstellungen des Quantisierers (1C) während mehrerer Probeläufe für ein zu codierendes Signalsegment und zur Auswahl derjenigen Einstellung des Quantisierers (1C) für die endgültige Codierung und Übertragung des Signalsegmentes, die bei den Probeläufen ein Bitvolumen ergeben hat, das mit einem Sollbitvolumen möglichst gut übereinstimmt,
**dadurch gekennzeichnet,**
**daß** Mittel (3,S2,S3) dafür vorgesehen sind, die feinste Einstellung des Quantisierers (1C) dann als endgültige Einstellung zu verwenden, wenn das Sollbitvolumen größer ist als das zur feinsten Einstellung gehörende Bitvolumen und die gröbste Einstellung des Quantisierers (1C) dann als endgültige Einstellung zu verwenden, wenn das Sollbitvolumen kleiner ist als das zur gröbsten Einstellung gehörende Bitvolumen,
**dass** die Steuereinheit (3) zur weiteren Berechnung der endgültigen, optimalen Einstellung des Quantisierers (1C) mit einer Berechnungsvorschrift, die der mathematischen Intervallschachtelung entspricht, versehen ist.

2. Coder nach Anspruch 1
**dadurch gekennzeichnet,**
**daß** Mittel (3) dafür vorgesehen sind, die Intervallschachtelung nach einer vorbestimmten Anzahl von Intervallen zu beenden.

3. Coder nach einem der vorhergehenden Ansprüche,
**dadurch gekennzeichnet,**
**daß** es sich bei dem Coder um einen Video-Coder (1) handelt und daß es sich bei den Signalsegmenten
- um mindesten ein Videobild oder
- um einen Teil eines videobildes oder
- um Differenzen von Videobildern (b) oder
- um Teile von Differenzbildern
handelt.

## Claims

1. A coder for segmented coding of an input signal (b) by means of
- a controllable quantizer (1C),
- a buffer memory (6) for buffering data of the input signal (b), which are quantized and VLC-coded,
- a bit counter (4) for computing the bit volume (number of bits) resulting from a VLC coding of the signal element during a trial run with a quantization step of the quantizer (1C) currently selected by a control unit (3),
- the control unit (3) for different adjustments of the quantizer (1C) during a plurality of trial runs for a signal segment to be coded and for selecting that adjustment of the quantizer (1C) for the final coding and transmission of the signal segment which, during the trial runs, has yielded a bit volume which substantially corresponds to a nominal bit volume,
**characterized in that** means (3, S2, S3) are provided for using the finest adjustment of the quantizer (1C) as the final adjustment when the nominal bit volume is larger than the bit volume associated with the finest adjustment, and the coarsest adjustment of the quantizer (1C) is used as the final adjustment when the nominal bit volume is smaller than the bit volume associated with the coarsest adjustment, **in that**, for further computing the final, optimal adjustment of the quantizer (1C), the control unit (3) employs a computation prescription which corresponds to the mathematical interval bisection.

2. A coder as claimed in claim 1, **characterized in that** means (3) are provided for finishing the interval bisection after a predetermined number of intervals.

3. A coder as claimed in any one of the preceding claims, **characterized in that** the coder is a video coder (1) and **in that** the signal segments are
- at least a video picture, or
- a part of a video picture, or
- differences of video pictures (b), or
- parts of difference pictures.

## Revendications

1. Codeur pour le codage par segmentation d'un signal d'entrée (b) avec :
- un quantificateur commandable (IC),
- une mémoire tampon (6) pour l'enregistrement temporaire des données quantifiées et codées VLC du signal d'entrée (b),
- un compteur binaire (4) pour le calcul du volume binaire (nombre de bits) obtenus à partir d'un codage VLC de l'élément de signal pendant un essai de fonctionnement pas à pas du quantificateur (1C) sélectionné par une unité de commande (3);
- l'unité de commande (3) pour différents réglages du quantificateur (1C) pendant plusieurs essais de fonctionnement pour un segment de signal à coder et pour la sélection du réglage respectif du quantificateur (1C) pour le codage définitif et la transmission du segment de signal, qui a déterminé lors des essais de fonctionnement un volume binaire qui correspond le mieux à un volume binaire de consigne,
**caractérisé en ce**
**que** des moyens (3, S2, S3) sont prévus pour utiliser le réglage le plus fin du quantificateur (1C) comme réglage définitif lorsque le volume binaire de consigne est supérieur à volume binaire appartenant au réglage le plus fin et pour utiliser le réglage le plus grossier du quantificateur (1C) comme réglage définitif lorsque le volume binaire de consigne est inférieur au volume binaire appartenant au réglage le plus grossier,
et **que** l'unité de commande (3) est prévue pour le calcul ultérieur du réglage optimal définitif du quantificateur (1C) avec une consigne de calcul qui correspond à l'emboîtement mathématique des intervalles.

2. Codeur selon la revendication 1,
**caractérisé en ce**
**que** des moyens (3) sont prévus pour mettre fin à l'emboîtement des intervalles après un nombre prédéterminé d'intervalles.

3. Codeur selon l'une des revendications précédentes,
**caractérisé en ce**
**que** le codeur est un codeur vidéo (1) et que les segments de signal sont
- au moins une image vidéo ou
- une partie d'une image vidéo ou
- des différences d'images vidéo (b) ou
- de parties d'images différentielles.
